# EUROPEAN PATENT SPECIFICATION

(11) **EP 3 101 235 B1**
(45) Date of publication and mention of the grant of the patent: **05.05.2021**
(21) Application number: 16170808.6
(22) Date of filing: 23.05.2016
(51) Int. Cl.: F01D 11/00, F16J 15/32

(54) **SEAL ASSEMBLY FOR A GAS TURBINE ENGINE**
DICHTUNGSANORDNUNG FÜR EIN GASTURBINENTRIEBWERK
ENSEMBLE D'ÉTANCHÉITÉ POUR MOTEUR DE TURBINE À GAZ

(30) Priority: 22.05.2015 US 201514719569
(43) Date of publication of application: 07.12.2016
(73) Proprietor: Raytheon Technologies Corporation, Farmington, CT 06032 (US)
(72) Inventor: JENKINS, Decari S., Manchester, CT 06040 (US); MILLER, Andrew S., Marlborough, CT 06447 (US)
(74) Representative: Dehns

(56) References cited:
- EP-A1- 0 921 277
- EP-A1- 2 746 625
- EP-A2- 1 323 893
- EP-A2- 2 562 363
- FR-A1- 2 937 098
- GB-A- 2 027 818
- US-A1- 2009 142 180

## Description

### BACKGROUND

Gas turbine engines typically include a fan delivering air into a compressor. The air is compressed in the compressor and delivered into a combustion section where it is mixed with fuel and ignited. Products of this combustion pass downstream over turbine blades, driving them to rotate. Turbine rotors, in turn, drive the compressor and fan rotors.

The efficiency of the engine is impacted by ensuring that the products of combustion pass in as high a percentage as possible across the turbine blades. Leakage around the blades reduces efficiency.

Thus, a blade outer air seal is provided radially outward of the blades to prevent leakage radially outwardly of the blades. The blade outer air seal may be held radially outboard from the rotating blade via connections on the case or a blade outer air seal support structure. The clearance between the blade outer air seal and a radially outer part of the blade is referred to as a tip clearance.

Since the rotating blade and blade outer air seal may respond radially at different rates due to loads, the tip clearance may be reduced and the blade may rub on the blade outer air seal, which is undesirable. Therefore, there is a need to control the clearance between the blade and the blade outer air seal in order to increase the efficiency of the gas turbine engine.

EP 2562363 A2 relates to a gas turbine nozzle. EP 0921277 A1 relates to a steam cooling type gas turbine. US 2009/142180 A1 relates to a circumferential seal and a rotating portion. FR 2937098 A1 , which shows the technical features of the preamble of the independent claims, relates to sealing means. GB 2027818 A relates to seals. EP 1323893 relates to resilient seals in turbines. EP 2746625 A1 relates to a sealing arrangement.

### SUMMARY

In a first aspect of the invention, a seal assembly for a gas turbine engine includes a first member including a first seal land for contacting a first structure. A second member includes a second seal land for contacting a second structure and a third seal land for contacting a third structure. The first member and the second member form a pivotable connection. The first member and the second member each form a circumferential ring. The pivotable connection includes a male portion on one of the first member and the second member received within a female portion on the other of the first member and the second member, and the pivotable connection is spring loaded.

In a further embodiment of the above, at least one of the first member and the second member includes at least one passage that extends through a body portion.

In a further embodiment of any of the above, the first member and the second member each form a circumferential ring.

In a further embodiment of any of the above, the first seal land is located on a first end of the first member and the second seal land and the third seal land are located on opposite ends of the second member.

In a further embodiment of any of the above, the pivotable connection includes a male portion on one of the first member and the second member received within a female portion on the other of the first member and the second member.

In a further embodiment of any of the above, the pivotable connection is spring loaded.

In a further embodiment of any of the above, the first seal land and the third seal land are on a first side of the seal and the second seal land is on a second opposite side of the seal.

In a second aspect of the invention, a gas turbine engine includes a first structure. A second structure is spaced from the first structure. A third structure is aligned with the first structure. A seal includes a first member which includes a first seal land for contacting a first structure. A second member includes a second seal land for contacting a second structure and a third seal land for contacting a third structure. The first member and the second member form a pivotable connection. The first member and the second member each form a circumferential ring. The pivotable connection includes a male portion on one of the first member and the second member received within a female portion on the other of the first member and the second member, and the pivotable connection is spring loaded.

In a further embodiment of any of the above, the first structure, the second structure, and the third include one of a vane, blade outer air seal, engine static structure, engine case, or cover plate.

In a further embodiment of any of the above, at least one of the first member and the second member includes at least one passage that extends through a body portion.

In a further embodiment of any of the above, the first member and the second member each form a circumferential ring.

In a further embodiment of any of the above, the first seal land is located on a distal end of the first member and the second seal land and the third seal land are located on opposite ends of the second member.

In a further embodiment of any of the above, the pivotable connection includes a male portion on the first member received within a female portion on the second member.

In a further embodiment of any of the above, the pivotable connection is spring loaded for providing a biasing force between the first structure, the second structure, and the third structure.

In a further embodiment of any of the above, the first structure is axially aligned with the third structure and the second structure is axially downstream of the first structure and the second structure.

In a third aspect of the invention, a method of sealing gas turbine engine components includes engaging a first structure with a first seal land on a first member of a seal. A second structure is engaged with a second seal land on a second member of the seal. A third structure is engaged with a third seal land on the second member of the seal. The first member is attached to the second member with a pivotable connection. The first member and the second member each form a circumferential ring. The pivotable connection includes a male portion on one of the first member and the second member received within a female portion on the other of the first member and the second member, and the pivotable connection is spring loaded.

In a further embodiment of any of the above, the method includes applying a biasing force between the first structure, the second structure, and the third structure with the pivotable connection.

In a further embodiment of any of the above, the method includes directing cooling fluid through passages in at least one of the first member and the second member.

In a further embodiment of any of the above, the method includes pivoting the first member relative to the second member.

### BRIEF DESCRIPTION OF THE DRAWINGS

Figure 1 is a schematic view of an example gas turbine engine.
Figure 2 is a cross-sectional view of a turbine section of the example gas turbine engine of Figure 1.
Figure 3 is a cross-sectional view of an example support assembly for a blade outer air seal.
Figure 4 is a perspective view of a portion of the support assembly of Figure 3.
Figure 5 is a cross-sectional view of an example seal.
Figure 6 is an axial view of the example seal of Figure 5.

### DETAILED DESCRIPTION

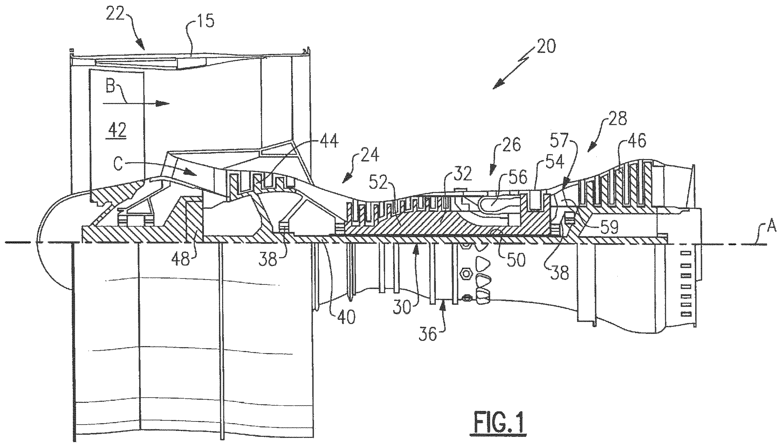

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet. The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5}. The "Low corrected fan tip speed" as disclosed herein according to one non-limiting embodiment is less than about 1150 ft / second (350.5 meters/second).

The example gas turbine engine includes fan 42 that comprises in one non-limiting embodiment less than about twenty-six (26) fan blades. In another non-limiting embodiment, fan section 22 includes less than about twenty (20) fan blades. Moreover, in one disclosed embodiment low pressure turbine 46 includes no more than about six (6) turbine rotors schematically indicated at 34. In another non-limiting example embodiment low pressure turbine 46 includes about three (3) turbine rotors. A ratio between number of fan blades 42 and the number of low pressure turbine rotors is between about 3.3 and about 8.6. The example low pressure turbine 46 provides the driving power to rotate fan section 22 and therefore the relationship between the number of turbine rotors 34 in low pressure turbine 46 and number of blades 42 in fan section 22 disclose an example gas turbine engine 20 with increased power transfer efficiency.

Although the gas turbine engine 20 shown is a high bypass gas turbine engine, other types of gas turbine engines could be used, such as a turbojet engine.

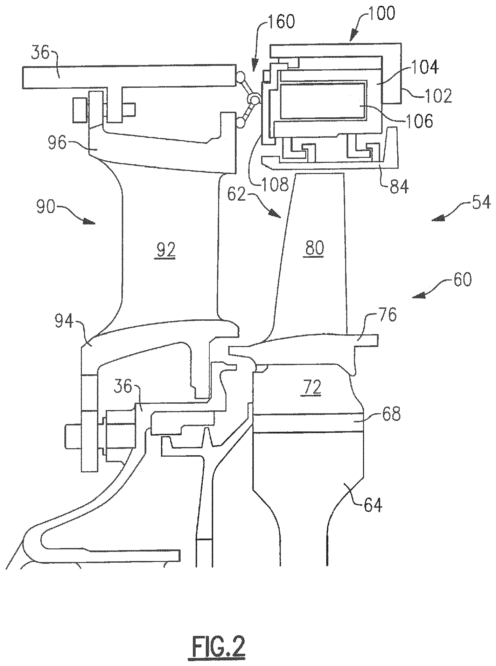

Figure 2 illustrates an enlarged schematic view of the high pressure turbine 54, however, other sections of the gas turbine engine 20 could benefit from this disclosure, such as the compressor section 24 or the low pressure turbine 46. In the illustrated example, the high pressure turbine 54 includes a one-stage turbine section with a first rotor assembly 60. In another example, the high pressure turbine 54 could include a two or more stage high pressure turbine section.

The first rotor assembly 60 includes a first array of rotor blades 62 circumferentially spaced around a first disk 64. Each of the first array of rotor blades 62 includes a first root portion 72, a first platform 76, and a first airfoil 80. Each of the first root portions 72 is received within a respective first rim 68 of the first disk 64. The first airfoil 80 extends radially outward toward a first blade outer air seal (BOAS) assembly 84. The BOAS 84 is supported by a support assembly 100.

The first array of rotor blades 62 are disposed in the core flow path that is pressurized in the compressor section 24 then heated to a working temperature in the combustor section 26. The first platform 76 separates a gas path side inclusive of the first airfoils 80 and a non-gas path side inclusive of the first root portion 72.

An array of vanes 90 are located axially upstream of the first array of rotor blades 62. Each of the array of vanes 90 include at least one airfoil 92 that extend between a respective vane inner platform 94 and an vane outer platform 96. In another example, each of the array of vanes 90 include at least two airfoils 92 forming a vane double. The vane outer platform 96 of the vane 90 may at least partially engage the BOAS 84.

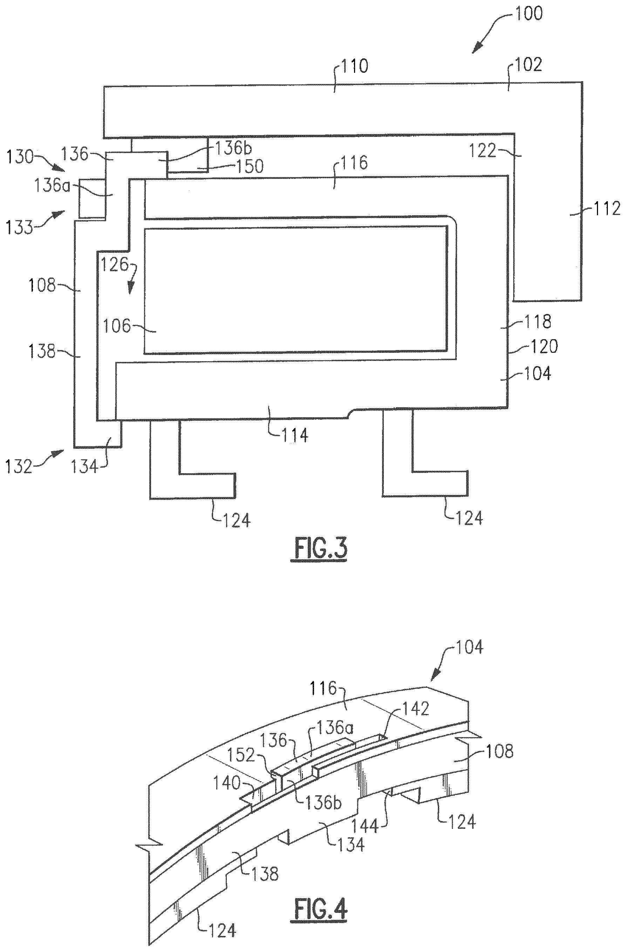

As shown in Figures 2 and 3, the support assembly 100 includes an outer support 102, an inner support 104, a control ring 106, and a cover plate 108. The outer support 102 forms a complete unitary hoop and includes an axially extending flange 110 and a radially extending flange 112. The axially extending flange 110 engages a case or a portion of the engine static structure 36 when installed in the gas turbine engine 20. The radially extending portion of the outer support 102 extends radially inward from the axially extending flange 110. In this disclosure, radial or radially extending is in relation to the engine axis A of the gas turbine engine 20 unless stated otherwise.

In the illustrated example, the inner support 104 includes a C-shaped cross section with an opening of the C-shaped cross section facing an axially upstream or forward direction. In another example, the opening of the C-shaped cross section faces in an axially downstream or rearward direction. The C-shaped cross section is formed by a radially inner flange 114 connected to a radially outer flange 116 by a radially extending flange 118. The radially extending flange 118 includes an axial surface 120 that contacts or is in close proximity to an axial surface 122 on the radially extending flange 112 on the outer support 102 to prevent the inner support 104 from moving axially downstream past the radially extending flange 112.

The radially outer flange 116 is spaced radially inward from the axially extending flange 110 on the outer support 102 such that a clearance between the axially extending flange 110 and the radially outer flange 116 is maintained during operation of the gas turbine engine 20. By maintaining the clearance between the axially extending flange 110 and the radially outer flange 116, the inner support 104 is allowed to grow radially outward when exposed to elevated operating temperatures during operation of the gas turbine engine 20 without transferring a load to the outer support 102.

In the illustrated example, the radially inner flange 114 includes attachment members 124 that extend radially inward from a radially inner surface of the radially inner flange 114 to support the BOAS 84 as shown in Figures 1 and 2. Although the attachment members 124 are shown as a pair of hooks with distal ends pointing axially downstream in the illustrated example, the attachment members 124 could include hooks pointing in opposite directions or more than or less than two hooks.

In the illustrated example, the cover plate 108 is attached to an axially forward end of the inner support 104 to from a cavity 126 that surrounds the control ring 106. Both the inner support 104 and the cover plate 108 are made of corresponding segments that fit together to form a circumferential ring.

In one example, the cover plate 108 and the inner support 104 are made of the same material. By making the cover plate 108 and the inner support 104 of the same material, the thermal growth of the cover plate 108 will closely match the thermal growth of the inner support 104 to ensure that the axial ends of the inner support 104 grow at a similar rate in the radial direction. In another example, the cover plate 108 and the inner support 104 are made of dissimilar material to control positioning of the support assembly 100.

As shown in Figures 2 and 3, the cover plate 108 and the inner support 104 are attached to each other with a first retention member 130 and a second retention member 132. In the illustrated example, the first retention member 130 includes a bayonet attachment portion 133 on a radially outer edge of the cover plate 108 and the second retention member 132 includes a tab 134 on a radially inner edge of the cover plate 108. The tab 134 extends in an axially downstream direction. The first retention member 130 and the second retention member 132 allow for axial movement between the cover plate 108 and the inner support 104.

The bayonet attachment portion 133 includes a hook portion 136 having a radially extending portion 136a that is axially offset from a body portion 138 of the cover plate 108. The radially outer flange 116 of the inner support 104 includes a recess 140 for accepting the hook portion 136 and a groove 142 at least partially axially aligned with the recessed 140 and circumferentially offset such that the cover plate 108 can be rotated in a circumferential direction to move the hook portion 136 from the recessed 140 into the groove 142. The radially extending portion 136a of the hook portion 136 engages axial faces of the groove 142 and an axially extending portion 136b of the hook portion 136 engages a radially outer surface of the radially outer flange 116.

The tab 134, which forms the second retention member 132, is located on a radially inner edge of the cover plate 108. The tab 134 engages a radially inner surface of the radially inner flange 114 on the inner support 104 such that the bayonet attachment portion 133 and the tab 134 surround the inner support 104.

Opposing ends of the cover plate 108, which are circumferentially spaced from the first retention member 130 and the second retention member 132, fit within the inner support 104. As shown in Figure 3, the opposing ends of the cover plate 108 contact a radially inner surface of the radially outer flange 116 and a radially inner edge of the cover plate 108 contacts a radially outer surface of the radially inner flange 114.

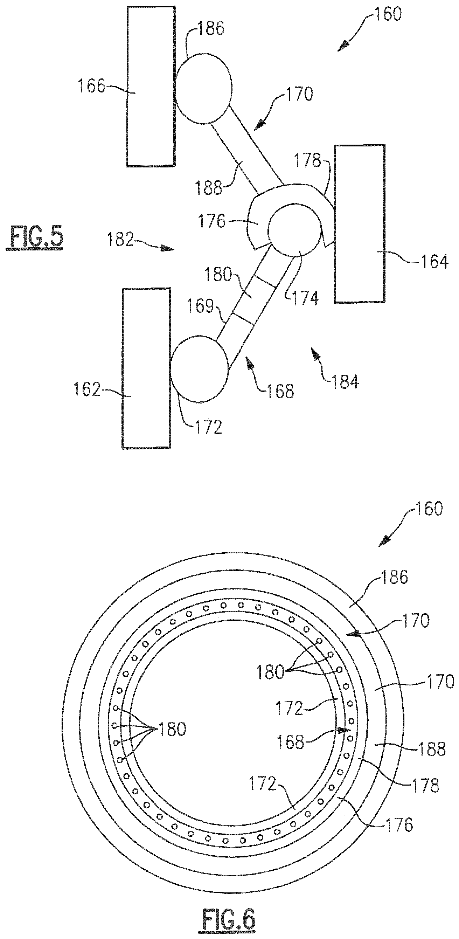

As shown in Figure 5, a seal 160 is formed between a first structure 162, a second structure 164, and a third structure 166. In the illustrated example shown in Figure 2, the first structure 162 is the outer platform 96 on the airfoil 92, the second structure 164 is the cover plate 108, and the third structure 166 is the engine static structure 36. In one example, the first structure 162 is axially aligned on the same side with the third structure 166 and spaced radially inward from the third structure 166. In another example, the first structure 162 could be axially offset from third structure 166. The second structure 164 is also spaced axially downstream of the first structure 162 and the third structure 166.

Although the outer platform 96, the cover plate 108, and the engine static structure 36 represent the first, second, and third structure 162, 164, and 166, respectively, the seal 160 could contact other structures of the gas turbine engine 20, such as the BOAS 84 or the engine case. Additionally, the seal 160 could be located in other parts of the gas turbine engine 20, such as the compressor section 24.

As shown in Figure 5 and 6, the seal 160 includes a first member 168 and a second member 170. The first member 168 includes a first seal land 172 at a first radially inner end and a male connector 174 on a second radially outer end. The first seal land 172 may engage the first structure 162 with a frictional contact that allows the rounded portion of the first seal land 172 to rotate or pivot on the first structure 162. Alternatively, the first seal land 172 could be rigidly attached to the first structure 162 such that the first seal land 172 does not move in the circumferential or radial direction relative to the first structure 162. The first seal land 172 and the male connector 174 extend in a circumferential direction and form a complete hoop. In another example, the first seal land 172 and the male connector 174 are divided into more than one segment to form a circumferential loop.

The first member 168 includes a body portion 169 that extends between and connects the first seal land 172 to the male connector 174. As shown in Figures 5 and 6, a plurality of cooling passages 180 extend through the first member 168 to allow fluid to travel between a first cavity 182 at a higher pressure to a second cavity 184 at a lower pressure.

The second member 170 includes a female connector 176 on a first radially inner end and a third seal land 186 on a second radially outer end. The female connector 176 receives the male connector 174 and includes a second seal land 178 that engages the second structure 164. The second seal land 178 may engage the second structure 164 with a frictional contact that allows the rounded portion of the second seal land 178 to rotate or pivot on the second structure 164. Alternatively, the second seal land 178 could be rigidly attached to the second structure 164 such that the second seal land 178 does not move in the circumferential or radial direction relative to the second structure 164. The female connector 176 including both the second seal land 178 and the third seal land 186 extend in a circumferential direction and form a complete hoop.

The second member 170 includes a body portion 188 that extends between and connects the third seal land 186 and the female connector 176. Although the illustrated example shows the plurality of cooling passages 180 in the first member 168, the plurality of cooling passages 180 could also be located in the body portion 188 of the second member 170. The cooling passages 180 located in the body portion 188 of the second member could be in addition to or in place of the cooling passages 180 in the first member 168 depending on the desired amount and direction of flow required.

Depending on a desired amount of relative movement between the first, second, and third structures 162, 164, 166, a stiffness of the first member 168 and a stiffness of the second member 170 could vary. For example, the first member 168 could have stiffness greater than, equal to, or less than a stiffness of the second member 170.

In order to provide resistance to deflections in the first, second, and third structures 162, 164, 166, a pivotable connection between the male connector 174 and the female connector 176 is spring loaded to resist the deflection between the first, second, and third structures 162, 164, 166.

During assembly of the support assembly 100, the plurality of inner supports 104 are arranged in a circumferential ring surrounding the control ring 106 with the control ring 106 located in the cavity 126. Each of the corresponding plurality of cover plates 108 is placed on the inner support 104 such that the hook portion 136 on each of the plurality of cover plates 108 is located within the corresponding recess 140 in each of the plurality of inner supports 104.

When the plurality of cover plates 108 are located on the inner supports 104, the plurality of cover plates 108 are rotated in unison such that the hook portion 136 on each of the plurality of cover plates 108 moves into the corresponding grooves 142 on each of the inner supports 104. When each of the plurality of cover plates 108 is initially placed in the grooves 142 of the inner support 104, one of the circumferential ends of each of the plurality of cover plates 108 will overlap an adjacent inner support 104. As the plurality of cover plates 108 rotate, each of the plurality of cover plates 108 will circumferentially align with a corresponding one of the inner supports 104. The plurality of cover plates 108 are prevented from rotating further by a stop 144 on the inner support 104 that engages the tab 134.

The inner supports 104, the control ring 106, and the plurality of cover plates 108 are then placed within the outer support 102 such that the axial surface 120 on the inner support 104 contacts or is in close proximity to the axial surface 122 on the outer support 102. A plurality of cover plate tabs 150 extend from a radially inner surface of the axially extending flange 110 of the outer support 102 and engage an edge 152 on each of the hook portions 136 to prevent each of the cover plates 108 from rotating out of the groove 142 after being installed into the outer support 102.

When the support assembly 100 is placed within the gas turbine engine 20, the seal 160 is placed adjacent the cover place 108. The first member 168 and the second member 170 provide a stabilizing force that vertically aligns the axial surface 120 with the axial surface 122. A spring force creates the stability and prevents a range of tilting of the inner support 104.

The preceding description is exemplary rather than limiting in nature. Variations and modifications to the disclosed examples may become apparent to those skilled in the art that do not necessarily depart from the essence of this disclosure. The scope of legal protection given to this disclosure can only be determined by studying the following claims.

## Claims

1. A seal assembly for a gas turbine engine comprising:
a first member (168) including a first seal land (172) for contacting a first structure (162);
a second member (170) including a second seal land (178) for contacting a second structure (164) and a third seal land (186) for contacting a third structure (166), wherein the first member (168) and the second member (170) form a pivotable connection;
wherein the first member (168) and the second member (170) each form a circumferential ring; and **characterised in that**
the pivotable connection includes a male portion (174) on one of the first member (168) and the second member (170) received within a female portion (176) on the other of the first member (168) and the second member (170), and
wherein the pivotable connection is spring loaded.

2. The assembly of claim 1, wherein at least one of the first member (168) and the second member (170) includes at least one passage extending through a body portion.

3. The assembly of any preceding claim, wherein the first seal land (172) is located on a first end of the first member (168) and the second seal land (178) and the third seal land (186) are located on opposite ends of the second member (170).

4. The assembly of any preceding claim, wherein the first seal land (172) and the third seal land (186) are on a first side of the seal and the second seal land (178) is on a second opposite side of the seal.

5. A gas turbine engine comprising:
a first structure (162);
a second structure (164) spaced from the first structure;
a third structure (166) aligned on the same side as the first structure with the first structure; and
a seal assembly as claimed in any preceding claim.

6. The gas turbine engine of claim 5, wherein the first structure (162), the second structure (164), and the third structure (166) include one of a vane, blade outer air seal, engine static structure, engine case, or cover plate.

7. The gas turbine engine of claims 5 or 6, wherein the first seal land (172) is located on a distal end of the first member (168) and the second seal land (178) and the third seal land (186) are located on opposite ends of the second member.

8. The gas turbine engine of any of claims 5-7, wherein the pivotable connection includes a male portion (174) on the first member (162) received within a female portion (176) on the second member (170).

9. The gas turbine engine of any of claims 5-8, wherein the pivotable connection is spring loaded for providing a biasing force between the first structure (162), the second structure (164), and the third structure (166).

10. The gas turbine engine of any of claims 5-9, wherein the first structure (162) is axially aligned on the same side with the third structure (166) and the second structure (164) is axially downstream of the first structure (162) and the second structure (164).

11. A method of sealing and/or stabilizing gas turbine engine components comprising:
engaging a first structure (162) with a first seal land (172) on a first member (168) of a seal;
engaging a second structure (164) with a second seal land (178) on a second member (170) of the seal;
engaging a third structure (166) with a third seal land (186) on the second member (170) of the seal, wherein the first member (168) is attached to the second member (170) with a pivotable connection;
wherein the first member (168) and the second member (170) each form a circumferential ring; and **characterised in that**
the pivotable connection includes a male portion (174) on one of the first member (168) and the second member (170) received within a female portion (176) on the other of the first member (168) and the second member (170), and
wherein the pivotable connection is spring loaded.

12. The method of claim 10, further comprising applying a biasing force between the first structure (162), the second structure (164), and the third structure (166) with the pivotable connection.

13. The method of claims 11 or 12, further comprising directing cooling fluid through passages in at least one of the first member (168) and the second member (170), and/or
further comprising pivoting the first member (168) relative to the second member (170).

## Patentansprüche

1. Dichtungsanordnung für ein Gasturbinentriebwerk, umfassend:
ein erstes Element (168), das eine erste Dichtungsauflage (172) zum Kontaktieren einer ersten Struktur (162) beinhaltet;
ein zweites Element (170), das eine zweite Dichtungsauflage (178) zum Kontaktieren einer zweiten Struktur (164) und eine dritte Dichtungsauflage (186) zum Kontaktieren einer dritten Struktur (166) beinhaltet, wobei das erste Element (168) und das zweite Element (170) eine schwenkbare Verbindung ausbilden;
wobei das erste Element (168) und das zweite Element (170) jeweils einen umlaufenden Ring ausbilden; und **gekennzeichnet dadurch, dass**
die schwenkbare Verbindung einen Einsteckabschnitt (174) an einem des ersten Elements (168) und des zweiten Elements (170) beinhaltet, der innerhalb eines Aufnahmeabschnitts (176) an dem anderen des ersten Elements (168) und des zweiten Elements (170) empfangen wird, und
wobei die schwenkbare Verbindung federbelastet ist.

2. Anordnung nach Anspruch 1, wobei mindestens eines des ersten Elements (168) und des zweiten Elements (170) mindestens einen Durchgang beinhaltet, der sich durch einen Körperabschnitt hindurch erstreckt.

3. Anordnung nach einem der vorhergehenden Ansprüche, wobei sich die erste Dichtungsauflage (172) an einem ersten Ende des ersten Elements (168) befindet und sich die zweite Dichtungsauflage (178) und die dritte Dichtungsauflage (186) an gegenüberliegenden Enden des zweiten Elements (170) befinden.

4. Anordnung nach einem der vorhergehenden Ansprüche, wobei die erste Dichtungsauflage (172) und die dritte Dichtungsauflage (186) auf einer ersten Seite der Dichtung liegen und die zweite Dichtungsauflage (178) auf einer zweiten gegenüberliegenden Seite der Dichtung liegt.

5. Gasturbinentriebwerk, umfassend:
eine erste Struktur (162);
eine zweite Struktur (164), die von der ersten Struktur beabstandet ist;
eine dritte Struktur (166), die auf derselben Seite wie die erste Struktur mit der ersten Struktur ausgerichtet ist; und
eine Dichtungsanordnung nach einem der vorhergehenden Ansprüche.

6. Gasturbinentriebwerk nach Anspruch 5, wobei die erste Struktur (162), die zweite Struktur (164) und die dritte Struktur (166) eines von einer Leitschaufel, äußeren Laufschaufelspaltdichtung, statischen Struktur des Triebwerks, Triebwerksgehäuse oder Abdeckplatte beinhalten.

7. Gasturbinentriebwerk nach Anspruch 5 oder 6, wobei sich die erste Dichtungsauflage (172) an einem distalen Ende des ersten Elements (168) befindet und sich die zweite Dichtungsauflage (178) und die dritte Dichtungsauflage (186) an gegenüberliegenden Enden des zweiten Elements befinden.

8. Gasturbinentriebwerk nach einem der Ansprüche 5-7, wobei die schwenkbare Verbindung einen Einsteckabschnitt (174) an dem ersten Element (162) beinhaltet, der innerhalb eines Aufnahmeabschnitts (176) an dem zweiten Element (170) empfangen wird.

9. Gasturbinentriebwerk nach einem der Ansprüche 5-8, wobei die schwenkbare Verbindung zur Bereitstellung einer Vorspannkraft zwischen der ersten Struktur (162), der zweiten Struktur (164) und der dritten Struktur (166) federbelastet ist.

10. Gasturbinentriebwerk nach einem der Ansprüche 5-9, wobei die erste Struktur (162) auf derselben Seite axial mit der dritten Struktur (166) ausgerichtet ist und die zweite Struktur (164) axial stromabwärts von der ersten Struktur (162) und der zweiten Struktur (164) liegt.

11. Verfahren zur Dichtung und/oder Stabilisierung von Gasturbinentriebwerkskomponenten, umfassend:
Ineingriffnehmen einer ersten Struktur (162) mit einer ersten Dichtungsauflage (172) an einem ersten Element (168) einer Dichtung;
Ineingriffnehmen einer zweiten Struktur (164) mit einer zweiten Dichtungsauflage (178) an einem zweiten Element (170) der Dichtung;
Ineingriffnehmen einer dritten Struktur (166) mit einer dritten Dichtungsauflage (186) an dem zweiten Element (170) der Dichtung, wobei das erste Element (168) an dem zweiten Element (170) mit einer schwenkbaren Verbindung befestigt ist;
wobei das erste Element (168) und das zweite Element (170) jeweils einen umlaufenden Ring ausbilden; und **gekennzeichnet dadurch, dass**
die schwenkbare Verbindung einen Einsteckabschnitt (174) an einem des ersten Elements (168) und des zweiten Elements (170) beinhaltet, der innerhalb eines Aufnahmeabschnitts (176) an dem anderen des ersten Elements (168) und des zweiten Elements (170) empfangen wird, und
wobei die schwenkbare Verbindung federbelastet ist.

12. Verfahren nach Anspruch 10, ferner umfassend Anwenden einer Vorspannkraft zwischen der ersten Struktur (162), der zweiten Struktur (164) und der dritten Struktur (166) mit der schwenkbaren Verbindung.

13. Verfahren nach Anspruch 11 oder 12, ferner umfassend Leiten von Kühlfluid durch Durchgänge hindurch in mindestens eines des ersten Elements (168) und des zweiten Elements (170), und/oder
ferner umfassend Schwenken des ersten Elements (168) relativ zum zweiten Element (170).

## Revendications

1. Ensemble d'étanchéité pour moteur de turbine à gaz comprenant :
un premier élément (168) comportant une première zone d'étanchéité (172) pour entrer en contact avec une première structure (162) ;
un second élément (170) comportant une deuxième zone d'étanchéité (178) pour entrer en contact avec une deuxième structure (164) et une troisième zone d'étanchéité (186) pour entrer en contact avec une troisième structure (166), dans lequel le premier élément (168) et le second élément (170) forment une liaison pivotante ;
dans lequel le premier élément (168) et le second élément (170) forment chacun un anneau circonférentiel ; et **caractérisé en ce que**
la liaison pivotante comporte une partie mâle (174) sur l'un du premier élément (168) et du second élément (170) reçue à l'intérieur d'une partie femelle (176) sur l'autre du premier élément (168) et du second élément (170), et
dans lequel la liaison pivotante est chargée par ressort.

2. Ensemble selon la revendication 1, dans lequel au moins l'un du premier élément (168) et du second élément (170) comporte au moins un passage s'étendant à travers une partie de corps.

3. Ensemble selon une quelconque revendication précédente, dans lequel la première zone d'étanchéité (172) est située sur une première extrémité du premier élément (168) et la deuxième zone d'étanchéité (178) et la troisième zone d'étanchéité (186) sont situées sur des extrémités opposées du second élément (170) .

4. Ensemble selon une quelconque revendication précédente, dans lequel la première zone d'étanchéité (172) et la troisième zone d'étanchéité (186) sont sur un premier côté du joint d'étanchéité et la deuxième zone d'étanchéité (178) est sur un second côté opposé du joint d'étanchéité.

5. Moteur de turbine à gaz comprenant :
une première structure (162) ;
une deuxième structure (164) espacée de la première structure ;
une troisième structure (166) alignée sur le même côté que la première structure avec la première structure ; et
un ensemble d'étanchéité selon une quelconque revendication précédente.

6. Moteur de turbine à gaz selon la revendication 5, dans lequel la première structure (162), la deuxième structure (164) et la troisième structure (166) comportent l'une d'une aube, d'un joint d'étanchéité à l'air extérieur de pale, d'une structure statique de moteur, d'un carter de moteur ou d'une plaque de recouvrement.

7. Moteur de turbine à gaz selon les revendications 5 ou 6, dans lequel la première zone d'étanchéité (172) est située sur une extrémité distale du premier élément (168) et la deuxième zone d'étanchéité (178) et la troisième zone d'étanchéité (186) sont situées sur des extrémités opposées du second élément.

8. Moteur de turbine à gaz selon l'une quelconque des revendications 5 à 7, dans lequel la liaison pivotante comporte une partie mâle (174) sur le premier élément (162) reçue à l'intérieur de la partie femelle (176) sur le second élément (170) .

9. Moteur de turbine à gaz selon l'une quelconque des revendications 5 à 8, dans lequel la liaison pivotante est chargée par ressort pour fournir une force de sollicitation entre la première structure (162), la deuxième structure (164) et la troisième structure (166).

10. Moteur de turbine à gaz selon l'une quelconque des revendications 5 à 9, dans lequel la première structure (162) est alignée axialement sur le même côté avec la troisième structure (166) et la deuxième structure (164) est axialement en aval de la première structure (162) et de la deuxième structure (164).

11. Procédé d'étanchéité et/ou de stabilisation de composants de moteur de turbine à gaz comprenant :
la mise en prise d'une première structure (162) avec une première zone d'étanchéité (172) sur un premier élément (168) d'un joint d'étanchéité ;
la mise en prise d'une deuxième structure (164) avec une deuxième zone d'étanchéité (178) sur un second élément (170) du joint d'étanchéité ;
la mise en prise d'une troisième structure (166) avec une troisième zone d'étanchéité (186) sur le second élément (170) du joint d'étanchéité, dans lequel le premier élément (168) est fixé au second élément (170) avec une liaison pivotante ;
dans lequel le premier élément (168) et le second élément (170) forment chacun un anneau circonférentiel ; et **caractérisé en ce que**
la liaison pivotante comporte une partie mâle (174) sur l'un du premier élément (168) et du second élément (170) reçue à l'intérieur d'une partie femelle (176) sur l'autre du premier élément (168) et du second élément (170), et
dans lequel la liaison pivotante est chargée par ressort.

12. Procédé selon la revendication 10, comprenant en outre l'application d'une force de sollicitation entre la première structure (162), la deuxième structure (164) et la troisième structure (166) avec la liaison pivotante.

13. Procédé selon les revendications 11 ou 12, comprenant en outre l'orientation du fluide de refroidissement à travers des passages dans au moins l'un du premier élément (168) et du second élément (170), et/ou
comprenant en outre le pivotement du premier élément (168) par rapport au second élément (170).
